# EUROPÄISCHE PATENTANMELDUNG

(11) **EP 3 454 485 A1**
(43) Veröffentlichungstag der Anmeldung: **13.03.2019**
(21) Anmeldenummer: 18189932.9
(22) Anmeldetag: 21.08.2018
(51) Int. Cl.: H04B 10/40, H04B 10/50, H04B 10/66, G02F 1/225

(54) **DYNAMISCH REKONFIGURIERBARER TRANSCEIVER FÜR OPTISCHE ÜBERTRAGUNGSSTRECKEN**

(30) Priorität: 11.09.2017 DE 102017008540
(71) Anmelder: Karlsruher Institut für Technologie, 76131 Karlsruhe (DE)
(72) Erfinder: SCHNEIDER, Marc, 76297 Stutensee (DE)
(74) Vertreter: Müller-Boré & Partner Patentanwälte PartG mbB

(57) **Zusammenfassung**

Die Erfindung betrifft einen Transceiver für optische Übertragungsstrecken, umfassend einen Mach-Zehnder-Modulator. Der Mach-Zehnder-Modulator umfasst eine optische Teilereinrichtung, welche ausgelegt ist, ein optisches Eingangssignal auf mindestens zwei optische Führungsarme zu verteilen, mindestens eine Modufationseinrichtung, welche als optischer Phasenmodulator zur Phasenmodulation des optischen Eingangssignals in den mindestens zwei optischen Führungsarmen ausgelegt ist, und eine optische Kombiniereinrichtung, wobei die optische Kombiniereinrichtung einen ersten optischen Signalausgang und einen zweiten optischen Signalausgang aufweist und ausgelegt ist, optische Signale der mindestens zwei optischen Führungsarme zu kombinieren. Der Transceiver umfasst ferner eine erste Monitor-Photodiode, welche mit dem zweiten optischen Signalausgang optisch verbunden ist und mit mindestens einem Datenausgang des Transceivers elektrisch verbunden ist, wobei der Mach-Zehnder-Modulator in einem Transmitter-Modus betreibbar ausgelegt ist, in dem ein optisches Ausgangssignal basierend auf dem optischen Eingangssignal an dem ersten optischen Signalausgang erzeugt wird, und in einem Receiver-Modus betreibbar ausgelegt ist, in dem das optische Eingangssignal an die erste Monitor-Photodiode gelenkt ist und in ein erstes elektrisches Datenausgangssignal umgewandelt wird, wobei das erste elektrische Datenausgangssignal an mindestens einen ersten Datenausgang des mindestens einen Datenausgangs des Transceivers geleitet ist. Die Erfindung betrifft ferner ein Verfahren zum Empfang eines optischen Eingangssignals.

## Beschreibung

Die Erfindung betrifft einen Transceiver für optische Übertragungsstrecken und ein Verfahren zum Empfang eines optischen Signals unter Verwendung eines solchen Transceivers.

Die Erfindung liegt auf dem Gebiet der Kommunikationstechnologie, insbesondere auf den Gebieten der Transceiver- und optischen Datenübertragungstechnologien. Bei optischen Übertragungsstrecken werden häufig sowohl Sende- als auch Empfangskanäle benötigt. Üblicherweise werden hierzu entweder Glasfasern für die Senderichtung und weitere Glasfasern für die Empfangsrichtung bereitgestellt, um gleichzeitig senden und empfangen zu können. Alternativ, bei wechselseitigem Senden und Empfangen, werden aufwendige optische Splitter benötigt und das Senden und Empfangen muss mit unterschiedlichen Wellenlängen erfolgen. Eine weitere Möglichkeit wäre der Einsatz von optischen Schaltern, um zwischen Sender und Empfänger umzuschalten, was jedoch sehr aufwendig ist.

Insbesondere verwenden optische Sendeelemente (Transmitter) für sehr hohe Datenraten nicht mehr direkt modulierte Laserdioden, um ein elektrisches Signal in ein optisches Signal umzusetzen. Stattdessen werden kontinuierlich emittierende Laserdioden eingesetzt, deren Licht dann in einem externen optischen Modulator mit einem elektrischen Eingangssignal moduliert wird. Als elektrooptische Modulatoren (EOM) werden häufig auf Lithiumniobat basierende Mach-Zehnder-Modulatoren (MZ-Modulatoren) eingesetzt. Insbesondere ist es im Bereich der Siliziumphotonik möglich, solche Mach-Zehnder-Modulatoren auf Silizium-Chips aufzubauen. Für komplexere Modulationsformate als beispielsweise Amplitude-Shift-Keying können auch mehrere MZ-Modulatoren miteinander verschaltet werden.

Zur Arbeitspunktregelung und Signalkontrolle ist es vorteilhaft, einen Teil des optischen Ausgangssignals des Gesamt-Modulators auf eine Monitor-Photodiode zu leiten und deren Ausgangssignal in die Arbeitspunktregelung zurück zu koppeln.

Optische Empfangselemente (Receiver) werden als Photodioden realisiert und je nach Übertragungskonzept direkt mit der für den Empfangskanal vorgesehenen optischen Glasfaser oder über einen optischen Splitter oder Schalter verbunden. Letzteres ist vorteilhaft für Einsatzzwecke, bei denen die hohe Übertragungskapazität einer Glasfaser oder eines optischen Kanals nur temporär für den Datenempfang benötigt wird, dann aber wieder als Sendekanal zur Verfügung stehen sollte.

Insbesondere in einem Wellenlängenmultiplexsystem (WDM-System) kann es vorteilhaft sein, jeden Wellenlängenkanal sowohl zum Senden von Daten als auch zum Empfang von Daten einsetzen zu können. Bei Ausfall eines Kanals könnte ein anderer so konfiguriert werden, dass er die Aufgabe übernimmt. Werden Transmitter und Receiver in Siliziumphotonik realisiert, wäre es vorteilhaft, ein einziges Chiplayout für verschiedene Einsatzzwecke verwenden zu können, um so höhere Stückzahlen und eine günstigere Produktion sowie eine geringere Anzahl an Varianten erzielen zu können.

Insbesondere wäre bei zeitlich stark schwankenden Anforderungen an die Sende- oder Empfangskapazität eine dynamische Rekonfigurierbarkeit vorteilhaft.

Daher ist es die Aufgabe der Erfindung, einen dynamisch rekonfigurierbaren Transmitter und Receiver bzw. einen dynamisch rekonfigurierbaren Transceiver für optische Übertragungsstrecken bereitzustellen, der ferner ohne nennenswerten Mehraufwand auf Seiten des photonischen Chips auskommt und auf viele Wellenlängenkanäle für monolithisch integrierte WDM-Systeme skalierbar ist.

Ein Aspekt betrifft einen Transceiver für optische Übertragungsstrecken, umfassend einen Mach-Zehnder-Modulator. Der Mach-Zehnder-Modulator umfasst eine optische Teilereinrichtung, welche ausgelegt ist, ein optisches Eingangssignal auf mindestens zwei optische Führungsarme zu verteilen, mindestens eine Modulationseinrichtung, welche als optischer Phasenmodulator zur Phasenmodulation des optischen Eingangssignals in den mindestens zwei optischen Führungsarmen ausgelegt ist, und eine optische Kombiniereinrichtung, wobei die optische Kombiniereinrichtung einen ersten optischen Signalausgang und einen zweiten optischen Signalausgang aufweist und ausgelegt ist, optische Signale der mindestens zwei optischen Führungsarme zu kombinieren. Der Transceiver umfasst ferner eine Monitor-Photodiode bzw. eine erste Monitor-Photodiode, welche optisch mit dem zweiten optischen Signalausgang verbunden ist und welche mit mindestens einem Datenausgang des Transceivers elektrisch verbunden ist, wobei der Mach-Zehnder-Modulator in einem Transmitter-Modus bzw. in einem ersten Transmitter-Modus betreibbar ausgelegt ist, in dem ein optisches Ausgangssignal basierend auf dem optischen Eingangssignal und dem elektrischen Eingangssignal an dem ersten optischen Signalausgang erzeugt wird, und in einem Receiver-Modus bzw. in einem ersten Receiver-Modus betreibbar ausgelegt ist, in dem das optische Eingangssignal an die Monitor-Photodiode bzw. die erste Monitor-Photodiode gelenkt ist und in ein erstes elektrisches Datenausgangssignal umgewandelt wird, wobei das erste elektrische Datenausgangsssignal an mindestens einen ersten Datenausgang des mindestens einen Datenausgangs des Transceivers geleitet ist.

Das optische Eingangssignal wird hierbei an die optische Teilereinrichtung geleitet, welche ausgelegt ist, das optische Eingangssignal auf mindestens zwei optische Führungsarme zu verteilen. Das optische Eingangssignal kann hierbei insbesondere durch Glasfasern an die optische Teilereinrichtung geleitet werden. Die mindestens zwei optischen Führungsarme können zumindest teilweise als Glasfasern bzw. auf Basis von Glasfasern ausgebildet sein. Hierbei kann es vorteilhaft sein, die mindestens zwei optischen Führungsarme aus dem gleichem Material bereitzustellen.

Der Mach-Zehnder-Modulator kann insbesondere durch monolithische Integration auf photonischen Chips und Bauteilen realisiert werden. Das optische Eingangssignal kann hierbei insbesondere durch Wellenleiter an die optische Teilereinrichtung geleitet werden und/oder die mindestens zwei optischen Führungsarme können zumindest teilweise als Wellenleiter bzw. auf Basis von Wellenleitern ausgebildet sein. Insbesondere gilt im Rahmen dieser Beschreibung, dass im Fall einer Realisierung des Mach-Zehnder-Modulators durch monolithische Integration auf einem photonischen Chip und/oder Bauteilen bzw. auf photonischen Chips und/oder Bauteilen optische Leitungen bzw. optische Signalstrecken, beispielsweise zur Übertragung von optischen Eingangs- und/oder Ausgangssignalen, des Mach-Zehnder-Modulators zumindest teilweise auf Basis von Glasfasern und/oder auf Basis von Wellenleitern ausgebildet sein können. Die Wellenleiter können hierbei insbesondere zumindest teilweise auf Basis von Silizium und/oder Siliziumnitrid und/oder Lithiumniobat ausgebildet sein.

Die optische Teilereinrichtung kann mindestens einen optischen Signaleingang aufweisen, ist jedoch nicht auf eine bestimmte Anzahl von optischen Signaleingängen beschränkt. Das optische Eingangssignal wird hierbei über den mindestens einen optischen Signaleingang an die optische Teilereinrichtung geleitet, und durch diese auf die mindestens zwei optischen Führungsarme verteilt. Die optische Teilereinrichtung kann hierbei als Y-Verteiler und/oder als Multimode-Interferometer ausgebildet sein.

Die mindestens eine Modulationseinrichtung ist als Phasenmodulator ausgebildet. Hierbei kann jeder optische Führungsarm der mindestens zwei optischen Führungsarme eine beliebige Anzahl von Phasenmodulatoren aufweisen. Die Phasenmodulatoren können ausgebildet sein, eine Lichtgeschwindigkeit eines den Phasenmodulator durchlaufendes optischen Signals zu reduzieren oder zu erhöhen, wodurch eine Phase des durchlaufenden optischen Signals nach Austritt aus dem Phasenmodulator beeinflusst wird. Hierfür kann ein Phasenmodulator beispielsweise aufgrund eines angelegten elektrischen bzw. magnetischen bzw. elektromagnetischen Signals die Lichtgeschwindigkeit des durchlaufenden optischen Signals regeln. Ferner können thermische oder mechanische Phasenmodulatoren verwendet werden. Bevorzugt weisen ein erster optischer Führungsarm und ein zweiter optischer Führungsarm jeweils einen im Wesentlichen identischen Phasenmodulator auf, wodurch eine effiziente Phasenmodulation ermöglicht wird.

Die optische Kombiniereinrichtung ist ausgelegt, Signale, welche über die mindestens zwei optischen Führungsarme übermittelt werden, zu kombinieren. Hierzu kann die optische Kombiniereinrichtung eine Anzahl von Signaleingängen der optischen Kombiniereinrichtung aufweisen, wobei die Anzahl von Signaleingängen der optischen Kombiniereinrichtung gleich groß oder größer ist als die Anzahl von optischen Führungsarmen. Insbesondere ist jeweils ein Signaleingang der optischen Kombiniereinrichtung mit jeweils einem optischen Führungsarm verbunden. Ferner ist die optische Kombiniereinrichtung ausgelegt, optische Signale, welche über die Führungsarme übermittelt werden, an den Signaleingängen der optischen Kombiniereinrichtung zu empfangen und zu kombinieren. Insbesondere wird hierdurch das optische Eingangssignal, welches durch die optische Teilereinrichtung auf die mindestens zwei optischen Führungsarme verteilt wird, durch die optische Kombiniereinrichtung zu einem optischen Ausgangssignal kombiniert. Insbesondere entsteht das optische Ausgangssignal durch eine zumindest teilweise Überlagerung der optischen Signale in den optischen Führungsarmen. Ist der Mach-Zehnder-Modulator beispielsweise mit zwei optischen Führungsarmen ausgebildet, wobei das Licht aus beiden Führungsarmen die gleiche Phasenlage aufweist, entsteht konstruktive Interferenz, und das optische Ausgangssignal ist hoch. Ist der Mach-Zehnder-Modulator beispielsweise mit zwei optischen Führungsarmen ausgebildet, wobei das Licht aus beiden Führungsarmen eine Phasenunterschied von 180° aufweist, entsteht destruktive Interferenz, und das optische Ausgangssignal ist niedrig, wobei das optische Ausgangssignal bevorzugt vollständig verschwindet.

Die optische Kombiniereinrichtung weist mindestens einen ersten Signalausgang und mindestens einen zweiten Signalausgang auf. Die optische Kombiniereinrichtung kann hierfür als Y-Koppler, bevorzugt als Multimode-Interferometer ausgebildet sein. Hierbei kann die optische Kombiniereinrichtung insbesondere derart ausgebildet sein, so dass, abhängig von der relativen Phasenlage des Lichts aus den mindestens zwei optischen Führungsarmen, konstruktive Interferenz an dem ersten Signalausgang und destruktive Interferenz an dem zweiten Signalausgang oder destruktive Interferenz an dem ersten Signalausgang und konstruktive Interferenz an dem zweiten Signalausgang entsteht.

Der Transceiver umfasst ferner eine Monitor-Photodiode, welche mit dem zweiten optischen Signalausgang der optischen Kombiniereinrichtung optisch verbunden ist. Der Transceiver ist jedoch nicht auf Photodioden beschränkt, und somit können auch andere Photodetektoren verwendet werden, beispielsweise Photodetektoren basierend auf dem äußeren und/oder inneren photoelektrischen Effekt. Insbesondere ist die Monitor-Photodiode derart optisch mit dem zweiten optischen Signalausgang der optischen Kombiniereinrichtung verbunden, dass die Monitor-Photodiode bzw. die erste Monitor-Photodiode ein optisches Signal, welches über den zweiten optischen Signalausgang der optischen Kombiniereinrichtung übermittelt wird, empfängt und in ein elektrisches Signal umwandelt. Bevorzugt ist die Monitor-Photodiode direkt, beispielsweise durch einen Wellenleiter und/oder eine Glasfaser, mit dem zweiten optischen Signalausgang verbunden. Die Monitor-Photodiode ist hierbei elektrisch mit mindestens einem Datenausgang des Transceivers verbunden. Insbesondere ist die Monitor-Photodiode hierbei derart elektrisch mit mindestens einem Datenausgang des Transceivers verbunden, dass ein elektrisches Signal, welches durch die Monitor-Photodiode aus einem optischen Signal erzeugt wurde, von der Monitor-Photodiode an den mindestens einen Datenausgang des Transceivers übermittelt werden kann. Bevorzugt ist die Monitor-Photodiode direkt, beispielsweise durch einen elektrischen Leiter und/oder ein Kabel, mit dem mindestens einen Datenausgang des Transceivers verbunden.

Der Mach-Zehnder-Modulator ist in einem Transmitter-Modus betreibbar ausgelegt bzw. der Mach-Zehnder-Modulator ist derart konfiguriert, dass der Mach-Zehnder-Modulator in dem Transmitter-Modus betrieben werden kann. In dem Transmitter-Modus ist die optische Teilereinrichtung konfiguriert, das optische Eingangssignal auf die mindestens zwei optischen Führungsarme zu verteilen. Die mindestens eine Modulationseinrichtung ist ausgelegt, Phasen der getrennten optischen Teilsignale, welche entlang der mindestens zwei optischen Führungsarme übermittelt werden, zu modulieren. Die optische Kombiniereinrichtung ist konfiguriert, die optischen Teilsignale nach deren Phasenmodulation zu kombinieren, wobei die Modulationseinrichtung und die optische Kombiniereinrichtung ausgelegt sind, so dass das optische Ausgangssignal an dem ersten optischen Signalausgang erzeugt wird. Hierbei können durch eine kontrollierte Phasenmodulation Daten auf das Ausgangssignal übertragen werden und über den ersten optischen Signalausgang gesendet werden. Die Monitor-Photodiode, welche mit dem zweiten Signalausgang verbunden ist, kann in dem Transmitter-Modus zur Regelung eines Arbeitspunktes des Mach-Zehnder-Modulators verwendet werden.

Der Mach-Zehnder-Modulator ist in einem Receiver-Modus betreibbar ausgelegt bzw. der Mach-Zehnder-Modulator ist derart konfiguriert, dass der Mach-Zehnder-Modulator in dem Receiver-Modus betrieben werden kann. In dem Receiver-Modus ist die optische Teilereinrichtung konfiguriert, das optische Eingangssignal auf die mindestens zwei optischen Führungsarme zu verteilen. Die Modulationseinrichtung und die optische Kombiniereinrichtung sind ausgelegt, so dass das optische Ausgangssignal im Wesentlichen vollständig dem optischen Eingangssignal entspricht, wobei das optische Ausgangssignal im Wesentlichen vollständig an dem zweiten optischen Signalausgang erzeugt bzw. an den zweiten optischen Signalausgang gelenkt wird. Die Monitor-Photodiode ist optisch mit dem zweiten optischen Signalausgang verbunden und konfiguriert, das optische Ausgangssignal in ein erstes elektrisches Datenausgangssignal umzuwandeln. Der Transceiver ist ferner konfiguriert, so dass das erste elektrische Datenausgangssignal in dem Receiver-Modus an mindestens einen ersten Datenausgang des mindestens einen Datenausgangs des Transceivers geleitet wird bzw. ist. Der mindestens eine Datenausgang des Transceivers, insbesondere der mindestens eine erste Datenausgang, kann hierbei ausgelegt sein, um mit externen Vorrichtungen bzw. Geräten verbunden zu werden. Beziehungsweise kann der mindestens eine Datenausgang des Transceivers, insbesondere der mindestens eine erste Datenausgang, hierbei ausgelegt sein, um das erste elektrische Datenausgangssignal zu übermitteln. Hierdurch können Daten, welche durch das optische Eingangssignal übermittelt werden, durch den Transceiver im Receiver-Modus an der Monitor-Photodiode empfangen und elektronisch weiterverarbeitet werden.

In einer weiteren Ausführungsform vorzugsweise auch in Kombination mit dem bereits beschriebenen bzw. mit anderen Ausführungsformen ist die optische Kombiniereinrichtung ausgelegt, ein zweites optisches Eingangssignal von dem ersten optischen Signalausgang auf die mindestens zwei optische Führungsarme zu verteilen, wobei die mindestens eine Modulationseinrichtung als optischer Phasenmodulator zur Phasenmodulation des zweiten optischen Eingangssignals in den mindestens zwei optischen Führungsarmen ausgelegt ist, wobei die optische Teilereinrichtung einen ersten optischen Signaleingang und einen zweiten optischen Signaleingang aufweist und ferner ausgelegt ist, optische Signale der mindestens zwei optischen Führungsarme zu kombinieren, wobei der Transceiver eine zweite Monitor-Photodiode umfasst, welche optisch mit dem zweiten optischen Signaleingang verbunden ist und welche mit mindestens einem Datenausgang des Transceivers elektrisch verbunden ist, wobei der Mach-Zehnder-Modulator in einem zweiten Transmitter-Modus betreibbar ausgelegt ist, in dem ein zweites optisches Ausgangssignal basierend auf dem zweiten optischen Eingangssignal an dem ersten optischen Signaleingang erzeugt wird, und in einem zweiten Receiver-Modus betreibbar ausgelegt ist, in dem das zweite optische Eingangssignal an die zweite Monitor-Photodiode gelenkt ist und in ein zweites elektrisches Datenausgangssignal umgewandelt wird, wobei das zweite elektrische Datenausgangssignal an mindestens einen zweiten Datenausgang des mindestens einen Datenausgangs des Transceivers geleitet ist. Hierdurch wird der Transceiver bidirektional einsetzbar, wobei optische Signale in beide Richtungen moduliert und/oder empfangen werden können.

Insbesondere ist die optische Kombiniereinrichtung hierbei ausgelegt, optische Signale, die der optischen Kombiniereinrichtung über die mindestens zwei optischen Führungsarme zugeführt werden zu kombinieren und optische Signale, die der optischen Kombiniereinrichtung über den ersten optischen Signalausgang zugeführt werden auf die mindestens zwei optischen Führungsarme zu verteilen. Somit ist die optische Kombiniereinrichtung entlang einer ersten Operationsrichtung als optischer Signalkombinierer und entlang einer zweiten, der ersten Operationsrichtung entgegengesetzten Operationsrichtung als optischer Signalteiler konfiguriert.

Die optische Teilereinrichtung ist ausgelegt, optische Signale, die der optischen Teilereinrichtung über den ersten Signaleingang zugeführt werden auf die mindestens zwei optischen Führungsarme zu verteilen, und optische Signale, die der optischen Teilereinrichtung über die mindestens zwei optischen Führungsarme übermittelt werden, zu kombinieren. Somit ist die optische Teilereinrichtung entlang der zweiten Operationsrichtung als optischer Signalkombinierer und entlang der ersten Operationsrichtung als optischer Signalteiler konfiguriert.

Insbesondere wird hierbei das zweite optische Eingangssignal, welches durch die optische Kombiniereinrichtung auf die mindestens zwei optischen Führungsarme verteilt wird, durch die optische Teilereinrichtung zu dem zweiten optischen Ausgangssignal kombiniert. Insbesondere entsteht das zweite optische Ausgangssignal durch eine zumindest teilweise Überlagerung der optischen Signale in den optischen Führungsarmen. Ist der Mach-Zehnder-Modulator beispielsweise mit zwei optischen Führungsarmen ausgebildet, wobei das Licht aus beiden Führungsarmen die gleiche Phasenlage aufweist, entsteht konstruktive Interferenz, und das zweite optische Ausgangssignal ist hoch. Ist der Mach-Zehnder-Modulator beispielsweise mit zwei optischen Führungsarmen ausgebildet, wobei das Licht aus beiden Führungsarmen eine Phasenunterschied von 180° aufweist, entsteht destruktive Interferenz, und das zweite optische Ausgangssignal ist niedrig, wobei das zweite optische Ausgangssignal bevorzugt vollständig verschwindet.

Hierbei kann die optische Teilereinrichtung insbesondere derart ausgebildet sein, so dass, abhängig von der relativen Phasenlage des Lichts aus den mindestens zwei optischen Führungsarmen, konstruktive Interferenz an dem ersten Signaleingang und destruktive Interferenz an dem zweiten Signaleingang oder destruktive Interferenz an dem ersten Signaleingang und konstruktive Interferenz an dem zweiten Signaleingang entsteht.

Der Transceiver umfasst ferner eine zweite Monitor-Photodiode, welche mit dem zweiten optischen Signaleingang der optischen Teilereinrichtung optisch verbunden ist. Der Transceiver ist jedoch nicht auf Photodioden beschränkt, und somit können auch andere Photodetektoren verwendet werden, beispielsweise Photodetektoren basierend auf dem äußeren und/oder inneren photoelektrischen Effekt. Insbesondere ist die zweite Monitor-Photodiode derart optisch mit dem zweiten optischen Signaleingang der optischen Teilereinrichtung verbunden, dass die zweite Monitor-Photodiode ein optisches Signal, welches über den zweiten optischen Signaleingang der optischen Teilereinrichtung übermittelt wird, empfängt und in ein elektrisches Signal umwandelt. Bevorzugt ist die zweite Monitor-Photodiode direkt, beispielsweise durch einen Wellenleiter und/oder eine Glasfaser, mit dem zweiten optischen Signaleingang der optischen Teilereinrichtung verbunden. Die zweite Monitor-Photodiode ist hierbei elektrisch mit mindestens einem Datenausgang des Transceivers verbunden. Insbesondere ist die zweite Monitor-Photodiode hierbei derart elektrisch mit mindestens einem Datenausgang des Transceivers verbunden, dass ein elektrisches Signal, welches durch die zweite Monitor-Photodiode aus einem optischen Signal erzeugt wurde, von der zweiten Monitor-Photodiode an den mindestens einen Datenausgang des Transceivers übermittelt werden kann. Bevorzugt ist die zweite Monitor-Photodiode direkt, beispielsweise durch einen elektrischen Leiter und/oder ein Kabel, mit dem mindestens einen Datenausgang des Transceivers verbunden.

Der Mach-Zehnder-Modulator ist in einem zweiten Transmitter-Modus betreibbar ausgelegt bzw. der Mach-Zehnder-Modulator ist derart konfiguriert, dass der Mach-Zehnder-Modulator in dem zweiten Transmitter-Modus betrieben werden kann. In dem zweiten Transmitter-Modus ist die optische Kombiniereinrichtung konfiguriert, das zweite optische Eingangssignal auf die mindestens zwei optischen Führungsarme zu verteilen. Die mindestens eine Modulationseinrichtung ist ausgelegt, Phasen der getrennten optischen Teilsignale, welche entlang der mindestens zwei optischen Führungsarme übermittelt werden, zu modulieren. Die optische Teilereinrichtung ist konfiguriert, die optischen Teilsignale nach deren Phasenmodulation zu kombinieren, wobei die mindestens eine Modulationseinrichtung und die optische Teilereinrichtung ausgelegt sind, so dass das zweite optische Ausgangssignal an dem ersten optischen Signaleingang der optischen Teilereinrichtung erzeugt wird. Hierbei können durch eine kontrollierte Phasenmodulation Daten auf das zweite optische Ausgangssignal übertragen werden und über den ersten optischen Signaleingang der optischen Teilereinrichtung gesendet werden. Die zweite Monitor-Photodiode, welche mit dem zweiten Signaleingang der optischen Teilereinrichtung verbunden ist, kann in dem zweiten Transmitter-Modus zur Regelung des Arbeitspunktes des Mach-Zehnder-Modulators verwendet werden.

Der Mach-Zehnder-Modulator ist in einem zweiten Receiver-Modus betreibbar ausgelegt bzw. der Mach-Zehnder-Modulator ist derart konfiguriert, dass der Mach-Zehnder-Modulator in dem zweiten Receiver-Modus betrieben werden kann. Der Mach-Zehnder-Modulator weist einen zweiten Receiver-Modus auf. In dem zweiten Receiver-Modus ist die optische Kombiniereinrichtung konfiguriert, das zweite optische Eingangssignal auf die mindestens zwei optischen Führungsarme zu verteilen. Die mindestens eine Modulationseinrichtung und die optische Teilereinrichtung sind ausgelegt, so dass das zweite optische Ausgangssignal im Wesentlichen vollständig dem zweiten optischen Eingangssignal entspricht, wobei das zweite optische Ausgangssignal im Wesentlichen vollständig an dem zweiten optischen Signaleingang der optischen Teilereinrichtung erzeugt wird. Die zweite Monitor-Photodiode ist optisch mit dem zweiten optischen Signaleingang der optischen Teilereinrichtung verbunden und konfiguriert, das zweite optische Ausgangssignal in ein zweites elektrisches Datenausgangssignal umzuwandeln. Der Transceiver ist ferner konfiguriert, so dass das zweite elektrische Datenausgangssignal in dem zweiten Receiver-Modus an mindestens einen zweiten Datenausgang des mindestens einen Datenausgangs des Transceivers geleitet wird bzw. ist. Der mindestens eine Datenausgang des Transceivers, insbesondere der mindestens eine zweite Datenausgarig, kann hierbei ausgelegt sein, um mit externen Vorrichtungen bzw. Geräten verbunden zu werden. Beziehungsweise kann der mindestens eine Datenausgang des Transceivers, insbesondere der mindestens eine zweite Datenausgang, hierbei ausgelegt sein, um das zweite elektrische Datenausgangssignal zu übermitteln. Hierdurch können Daten, welche durch das zweite optische Eingangssignal übermittelt werden, durch den Transceiver im zweiten Receiver-Modus an der zweiten Monitor-Photodiode empfangen und elektronisch weiterverarbeitet werden.

Vorzugsweise sind der mindestens eine erste Datenausgang des Transceivers und der mindestens eine zweite Datenausgang des Transceivers zu einem gemeinsamen Datenausgang des Transceivers verbunden. Beziehungsweise weist der Transceiver hierbei mindestens einen gemeinsamen Datenausgang auf, welcher mit dem mindestens einen ersten Datenausgang und dem mindestens einen zweiten Datenausgang derart verbunden ist, dass das erste elektrische Datenausgangssignal und das zweite elektrische Datenausgangssignal an den gemeinsamen Datenausgang des Transceivers geleitet werden bzw. sind. Somit kann an dem gemeinsamen Datenausgang das erste elektrische Datenausgangssignal und das zweite elektrische Datenausgangssignal elektronisch weiterverarbeitet und/oder übermittelt werden.

Vorzugsweise umfasst der Transceiver; eine Arbeitspunkteinheit zur Regelung des Arbeitspunktes des Mach-Zehnder-Modulators, wobei die erste Monitor-Photodiode ferner mit mindestens einem ersten Monitorsignalausgang elektrisch verbunden ist, wobei die Arbeitspunkteinheit über den ersten Monitorsignalausgang mit der ersten Monitor-Photodiode verbunden ist, und wobei die Arbeitspunkteinheit mit der mindestens einen Modulationseinrichtung und/oder mit mindestens einem Arbeitspunktmodulator verbunden ist. Insbesondere ist die erste Monitor-Photodiode hierbei derart elektrisch mit dem mindestens ersten Monitorsignalausgang verbunden, dass ein elektrisches Signal, welches durch die erste Monitor-Photodiode aus einem optischen Signal erzeugt wurde, von der ersten Monitor-Photodiode an den mindestens ersten Monitorsignalausgang übermittelt werden kann. Insbesondere kann die Arbeitspunkteinheit ausgelegt sein, die mindestens eine Modulationseinrichtung zur Regelung des Arbeitspunkts des Mach-Zehnder-Modulators, insbesondere durch ein elektrisches Steuersignal, anzusteuern. Insbesondere kann die Arbeitspunkteinheit ausgelegt sein, den mindestens einen Arbeitspunktmodulator zur Regelung des Arbeitspunkts des Mach-Zehnder-Modulators, insbesondere durch ein elektrisches Steuersignal, anzusteuern. Somit ist die Arbeitspunkteinheit ausgelegt, eine Phase eines optischen Signals in mindestens einem optischen Führungsarm zu beeinflussen. Insbesondere kann hierdurch der Arbeitspunkt des Mach-Zehnder-Modulators eingestellt werden, wobei die Arbeitspunkteinheit kontinuierlich oder periodisch einen derzeitigen Arbeitspunkt des Mach-Zehnder-Modulators über die Monitor-Photodiode überwacht. Vorzugsweise ist der Arbeitspunkt ein Quadraturpunkt, in welchem eine Intensität des optischen Ausgangssignals gerade in der Mitte zwischen einer maximalen Intensität des optischen Ausgangssignals und einer minimalen Intensität des optischen Ausgangssignals liegt.

Vorzugsweise ist die erste Monitor-Photodiode ausgelegt, mindestens ein erstes elektrisches Monitorsignal zur Regelung des Arbeitspunktes zu erzeugen und an den mindestens einen ersten Monitorsignalausgang zu leiten, wobei die Arbeitspunkteinheit ausgelegt ist, den Arbeitspunkt des Mach-Zehnder-Modulators basierend auf dem mindestens einen ersten elektrischen Monitorsignal zu regeln. Die erste Monitor-Photodiode kann insbesondere das erste elektrische Monitorsignal basierend auf einem Teil eines optischen Signals erzeugen, welches durch die optische Kombiniereinrichtung an dem zweiten optischen Signalausgang erzeugt wird. Die Arbeitspunkteinheit kann insbesondere das erste elektrische Monitorsignal empfangen und auswerten, wobei die Arbeitspunkteinheit einen aktuellen Arbeitspunkt des Mach-Zehnder-Modulators ermittelt. Basierend auf dem aktuellen ermittelten Arbeitspunkt ist die Arbeitspunkteinheit ausgelegt, den Arbeitspunkt des Mach-Zehnder-Modulators zu regeln.

Vorzugsweise umfasst der Transceiver ferner einen Signalverteiler, welcher ausgelegt ist, zumindest in dem Transmitter-Modus mindestens ein elektrisches Ausgangssignal der ersten Monitor-Photodiode an den mindestens einen ersten Monitorsignalausgang zu leiten, und zumindest in dem Receiver-Modus mindestens ein elektrisches Ausgangssignal der ersten Monitor-Photodiode an den mindestens einen ersten Datenausgang zu leiten, Der Signalverteiler kann hierbei direkt an der Monitor-Photodiode angeordnet sein. Der Signalverteiler kann ferner als Schalterelement ausgebildet sein, wobei das Schalterelement insbesondere durch eine Transceiveransteuerung angesteuert werden kann. Hierdurch wird eine effiziente Verteilung von durch die Monitor-Photodiode erzeugten Signalen ermöglicht. Der Signalverteiler kann ferner ein Speicherelement, beispielsweise ein RAM-Element, umfassen. Der Signalverteiler kann hierbei konfiguriert sein, in dem Speicherelement jeweils eine Sicherungskopie jedes verteilten Signals zu speichern. Die jeweilige Sicherungskopie kann hierbei solange in dem Speicherelement gespeichert sein, bis eine Bestätigung einer erfolgreichen Verteilung des Signals von dem Signalverteiler empfangen ist. Hierdurch kann ein ungewünschter Datenverlust vermieden werden.

Vorzugsweise umfasst der Signalverteiler eine Signalverstärkungseinrichtung und/oder eine Signalanpassungseinrichtung. Durch die Verwendung einer Signalverstärkungseinrichtung kann selbst ein schwaches elektrisches Ausgangssignal wie benötigt verstärkt werden. Die Signalverstärkungseinrichtung kann hierfür mit einer internen Energiequelle, z.B. einer Batterie, oder einer externen Energiequelle, z.B. ein externer Stromanschluss, verbunden sein. Die Signalverstärkungseinrichtung kann ferner ausgelegt sein, die Signalstärke des elektrischen Ausgangssignals zu ermitteln und mit einem Signalstärkenschwellenwert zu vergleichen. Ist die ermittelte Signalstärke größer oder gleich dem Signalstärkenschwellenwert, wird das elektrische Ausgangssignal nicht verstärkt. Ist die ermittelte Signalstärke kleiner als der Signalstärkenschwellenwert, wird das elektrische Ausgangssignal verstärkt, so dass das verstärkte elektrische Ausgangssignal eine Signalstärke aufweist, welche größer oder gleich dem Signalstärkenschwellenwert ist. Somit ermöglicht eine Signalverstärkungseinrichtung die Weiterverwendung von elektrischen Ausgangssignalen, welche eine Signalstärke unterhalb eines benötigten Signalstärkeschwellenwerts aufweisen. Der Signalstärkenschwellenwert kann durch den Hersteller des Transceivers vorgegebenen sein und/oder durch den Benutzer vorbestimmt sein und/oder dynamisch durch den Transceiver ermittelt werden und/oder durch eine mit dem Transceiver verbundene Vorrichtung an die Signalverstärkungseinrichtung übermittelt werden. Die Signalanpassungseinrichtung ist ausgelegt, das elektrische Ausgangssignal derart anzupassen, dass das elektrische Ausgangssignal weiterverwendet werden kann. Hierfür kann das Datensignal beispielsweise gemäß eines benötigten Datenformats angepasst werden. Ein Schema, nach welchem das elektrische Ausgangssignal angepasst wird, kann durch den Hersteller des Transceivers vorgegebenen sein und/oder durch den Benutzer vorbestimmt sein und/oder dynamisch durch den Transceiver ermittelt werden und/oder durch eine mit dem Transceiver verbundene Vorrichtung an die Signalanpassungseinrichtung übermittelt werden.

Vorzugsweise ist die zweite Monitor-Photodiode ferner mit mindestens einem zweiten Monitorsignalausgang elektrisch verbunden, wobei die Arbeitspunkteinheit über den mindestens einen zweiten Monitorsignalausgang mit der zweiten Monitor-Photodiode verbunden ist. Insbesondere ist die zweite Monitor-Photodiode hierbei derart elektrisch mit dem mindestens einen zweiten Monitorsignalausgang verbunden, dass ein elektrisches Signal, welches durch die zweite Monitor-Photodiode aus einem optischen Signal erzeugt wurde, von der zweiten Monitor-Photodiode an den mindestens einen zweiten Monitorsignalausgang übermittelt werden kann.

Vorzugsweise ist die zweite Monitor-Photodiode ausgelegt, mindestens ein zweites elektrisches Monitorsignal zur Regelung des Arbeitspunktes zu erzeugen und an den mindestens einen zweiten Monitorsignalausgang zu leiten, wobei die Arbeitspunkteinheit ausgelegt ist, den Arbeitspunkt des Mach-Zehnder-Modulators basierend auf dem mindestens einen zweiten elektrischen Monitorsignal zu regeln. Die zweite Monitor-Photodiode kann insbesondere das zweite elektrische Monitorsignal basierend auf einem Teil eines optischen Signals erzeugen, welches durch die optische Teilereinrichtung an dem zweiten optischen Signaleingang erzeugt wird. Die Arbeitspunkteinheit kann insbesondere das zweite elektrische Monitorsignal empfangen und auswerten, wobei die Arbeitspunkteinheit einen aktuellen Arbeitspunkt des Mach-Zehnder-Modulators ermittelt. Basierend auf dem aktuellen ermittelten Arbeitspunkt ist die Arbeitspunkteinheit ausgelegt, den Arbeitspunkt des Mach-Zehnder-Modulators zu regeln.

Vorzugsweise umfasst der Transceiver ferner einen zweiten Signalverteiler, welcher ausgelegt ist, zumindest in dem zweiten Transmitter-Modus mindestens ein elektrisches Ausgangssignal der zweiten Monitor-Photodiode an den mindestens einen zweiten Monitorsignalausgang zu leiten, und zumindest in dem Receiver-Modus mindestens ein elektrisches Ausgangssignal der zweiten Monitor-Photodiode an den mindestens einen zweiten Datenausgang zu leiten. Der zweite Signalverteiler kann hierbei direkt an der zweiten Monitor-Photodiode angeordnet sein. Der zweite Signalverteiler kann ferner als Schalterelement ausgebildet sein, wobei das Schalterelement insbesondere durch eine Transceiveransteuerung angesteuert werden kann. Hierdurch wird eine effiziente Verteilung von durch die zweite Monitor-Photodiode erzeugten Signalen ermöglicht. Der zweite Signalverteiler kann ferner ein Speicherelement, beispielsweise ein RAM-Element, umfassen. Der zweite Signalverteiler kann hierbei konfiguriert sein, in dem Speicherelement jeweils eine Sicherungskopie jedes verteilten Signals zu speichern. Die jeweilige Sicherungskopie kann hierbei solange in dem Speicherelement gespeichert sein, bis eine Bestätigung einer erfolgreichen Verteilung des Signals von dem zweiten Signalverteiler empfangen ist. Hierdurch kann ein ungewünschter Datenverlust vermieden werden.

Vorzugsweise umfasst der zweite Signalverteiler eine Signalverstärkungseinrichtung und/oder eine Signalanpassungseinrichtung. Hierbei können insbesondere die Signalverstärkungseinrichtung und/oder die Signalanpassungseinrichtung des zweiten Signalverteilers eine beliebige Kombination der Merkmale der Signalverstärkungseinrichtung und/oder der Signalanpassungseinrichtung des ersten Signalverteilers aufweisen.

Vorzugsweise umfasst der Transceiver ferner ein Umschalterelement, welches ausgelegt ist, zumindest in dem Transmitter-Modus die Modulationseinrichtung mit einem elektrischen Dateneingangssignal anzusteuern, und in dem Receiver-Modus die Modulationseinrichtung mit einem statischen elektrischen Steuersignal anzusteuern, wobei das statische elektrische Steuersignal derart angelegt ist, so dass das optische Eingangssignal im Wesentlichen vollständig an die erste Monitor-Photodiode geleitet wird. Durch die Ansteuerung der Modulationseinrichtung mit dem elektrischen Dateneingangssignal können Daten auf das optische Eingangssignal übertragen werden. Hierdurch kann der Transceiver schnell zwischen dem Transmitter-Modus und dem Receiver-Modus mit einer Umschaltgeschwindigkeit der Modulationseinrichtung geschaltet werden, wodurch eine effiziente und dynamische Schaltung des Transceivers ermöglicht wird.

In einer Ausführungsform umfasst- der Transceiver ferner ein zweites Umschalterelement, welches ausgelegt ist in dem zweiten Transmitter-Modus die mindestens eine Modulationseinrichtung mit einem elektrischen Dateneingangssignal anzusteuern, und in dem zweiten Receiver-Modus die mindestens eine Modulationseinrichtung mit einem statischen elektrischen Steuersignal anzusteuern, wobei das statische elektrische Steuersignal derart angelegt ist, so dass das zweite optische Eingangssignal im Wesentlichen vollständig an die zweite Monitor-Photodiode geleitet wird. Durch die Ansteuerung der mindestens einen Modulationseinrichtung mit dem elektrischen Dateneingangssignal können Daten auf das zweite optische Eingangssignal übertragen werden. Hierdurch kann der Transceiver schnell zwischen dem zweiten Transmitter-Modus und dem zweiten Receiver-Modus mit einer Umschaltgeschwindigkeit der mindestens einen Modulationseinrichtung geschaltet werden, wodurch eine effiziente und dynamische Schaltung des Transceivers ermöglicht wird. Somit kann der Transceiver effizient zwischen dem Transmitter-Modus, dem zweiten Transmitter-Modus, dem Receiver-Modus und dem zweiten Receiver-Modus geschaltet werden.

In einer weiteren Ausführungsform weist der Transceiver eine Datenübertragungsgeschwindigkeit von mindestens 10 Gigabit/s, bevorzugt mindestens 30 Gigabit/s, besonders bevorzugt mindestens 40 Gigabit/s auf. In einer weiteren Ausführungsform kann der Transceiver innerhalb von maximal 100 ps, bevorzugt innerhalb von maximal 50 ps, weiter bevorzugt innerhalb von maximal 25 ps zwischen dem Transmitter-Modus und dem Receiver-Modus umgeschaltet werden.

Ein weiterer Aspekt betrifft ein Verfahren zum Empfang eines optischen Eingangssignals, umfassend ein Bereitstellen eines Transceivers für optische Übertragungsstrecken. Der Transceiver umfasst einen Mach-Zehnder-Modulator umfassend eine optische Teilereinrichtung, welche ausgelegt ist, ein optisches Eingangssignal auf mindestens zwei optische Führungsarme zu verteilen, mindestens eine Modulationseinrichtung, welche als optischer Phasenmodulator zur Phasenmodulation des optischen Eingangssignals in den mindestens zwei optischen Führungsarmen ausgelegt ist, und eine optische Kombiniereinrichtung, welche einen ersten optischen Signalausgang und einen zweiten optischen Signalausgang aufweist und ausgelegt ist, optische Signale der mindestens zwei optischen Führungsarme zu kombinieren, und eine erste Monitor-Photodiode, welche mit dem zweiten optischen Signalausgang optisch verbunden ist und welche mit mindestens einem Datenausgang des Transceivers elektrisch verbunden ist, wobei der Mach-Zehnder-Modulator in einem Transmitter-Modus betreibbar ausgelegt ist, in dem ein optisches Ausgangssignal basierend auf dem optischen Eingangssignal an dem ersten optischen Signalausgang erzeugt wird, und in einem Receiver-Modus betreibbar ausgelegt ist, in dem das optische Eingangssignal im Wesentlichen vollständig an die Monitor-Photodiode gelenkt ist und in ein erstes elektrisches Datenausgangssignal umgewandelt wird. Insbesondere kann der Transceiver eine beliebige Kombination der in der Beschreibung offenbarten Merkmale umfassen.

Das Verfahren umfasst ferner ein Ansteuern des Mach-Zehnder-Modulators in dem Receiver-Modus derart, dass das optische Eingangssignal im Wesentlichen vollständig an den zweiten optischen Signalausgang gelenkt wird, und ein Umwandeln des optischen Eingangssignals durch die erste Monitor-Photodiode in das erste elektrische Datenausgangssignal. Das Verfahren umfasst ferner ein Leiten des ersten elektrischen Datenausgangssignals an mindestens einen ersten Datenausgang des mindestens einen Datenausgangs des Transceivers.

Die Erfindung wird ferner in nachfolgenden Figuren anhand von illustrativen Ausführungsformen beschrieben. Es zeigen:
- **Figur** 1:: eine schematische Ansicht eines Transceivers umfassend eines Mach-Zehnder-Modulators und einer Monitor-Photodiode;
- **Figur** 2:: eine schematische Ansicht des Transceivers aus Figur 1 mit einem Signalverteiler;
- **Figur** 3:: eine schematische Ansicht des Transceivers aus Figur 2 mit einer zweiten Monitor-Photodiode.

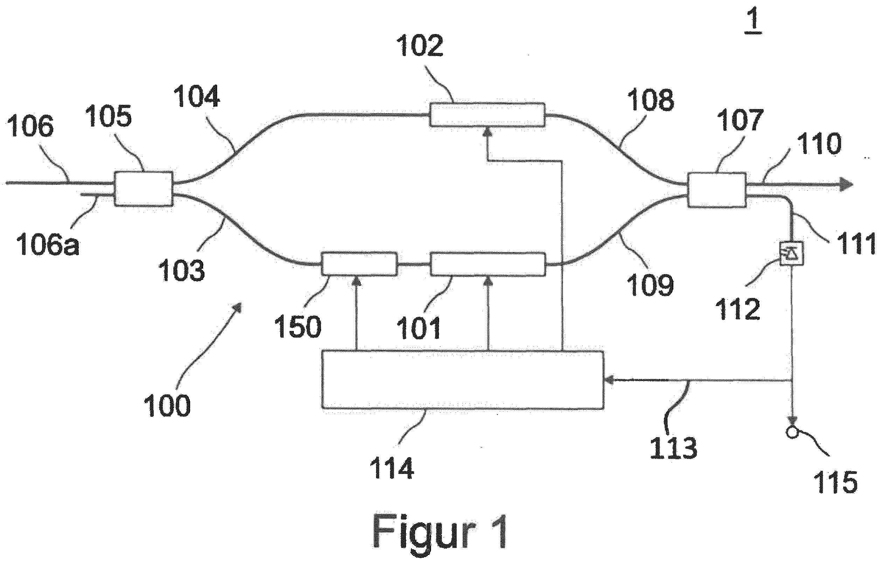

**Figur 1** zeigt einen Transceiver **1,** welcher einen Mach-Zehnder-Modulator **100** umfasst. Der Mach-Zehnder-Modulator **100** ist hierbei mit einer optischen Teilereinrichtung **105** ausgebildet, welche einen ersten Signaleingang **106** der optischen Teilereinrichtung **105** und einen zweiten Signaleingang **106a** der optischen Teilereinrichtung **105** umfasst. Ein optisches Eingangssignal kann über den ersten Signaleingang **106** der optischen Teilereinrichtung **105** und/oder den zweiten Signaleingang **106a** der optischen Teilereinrichtung **105** von der optischen Teilereinrichtung **105** empfangen werden. Die optische Teilereinrichtung **105** ist hierbei insbesondere ausgelegt, das Eingangssignal auf einen ersten optischen Führungsarm **103** und einen zweiten optischen Führungsarm **104** zu verteilen. Hierzu ist die optische Teilereinrichtung **105** beispielsweise als Multimode-Interferometer, insbesondere als 2x2 Multimode-Interferometer ausgebildet.

Ein erster Teil des optischen Eingangssignals durchläuft den ersten optischen Führungsarm **103** und wird durch einen Arbeitspunktmodulator **150** phasenmoduliert. Der Arbeitspunkt des Mach-Zehnder-Modulators **100** ist hierbei durch ein kontrolliertes Ansteuern des Arbeitspunktmodulators **150** einstellbar, wobei eine Arbeitspunkteinheit **114** den Arbeitspunktmodulator **150** durch ein Steuersignal kontrolliert.

Der erste Teil durchläuft ferner eine erste Modulationseinrichtung **101,** welche ausgelegt ist, eine Phase des ersten Teils zu modulieren. Die erste Modulationseinrichtung **101** kann hierbei als schneller HF-Phasenmodulator ausgebildet sein, und ist durch die Arbeitspunkteinheit **114** ansteuerbar. Die Reihenfolge von Arbeitspunktmodulator **150** und erster Modulationseinrichtung **101** ist hierbei nicht auf die gezeigte Reihenfolge beschränkt.

Ein zweiter Teil des optischen Eingangssignals durchläuft den zweiten optischen Führungsarm **104** und wird durch eine zweite Modulationseinrichtung **102** phasenmoduliert. Die zweite Modulationseinrichtung **102** kann hierbei als schneller HF-Phasenmodulator ausgebildet sein, und ist durch die Arbeitspunkteinheit **114** ansteuerbar. Durch ein Bereitstellen von jeweils mindestens einer Modulationseinrichtung **101, 102** in jedem optischen Führungsarm **103, 104** kann eine Effizienz der Phasenmodulation erhöht werden.

Das Bereitstellen eines Arbeitspunktmodulators **150** ist nicht zwingend erforderlich, und somit ist auch ein Mach-Zehnder-Modulator **100** ohne zusätzlichen Arbeitspunktmodulator **150** möglich. In diesem Fall kann die Arbeitspunktregelung über die mindestens eine Modulationseinrichtung **101, 102** ermöglicht werden.

Der erste Teil des Eingangssignals wird durch den ersten optischen Führungsarm **103** an den zweiten Signaleingang **109** der optischen Kombiniereinrichtung **107** geleitet, während der zweite Teil des Eingangssignals durch den zweiten optischen Führungsarm **104** an den ersten Signaleingang **108** der optischen Kombiniereinrichtung **107** geleitet wird. Die optische Kombiniereinrichtung **107** ist ausgelegt, den phasenmodulierten ersten Teil des Eingangssignals und den phasenmodulierten zweiten Teil des Eingangssignals zu einem optischen Ausgangssignal zu kombinieren. Hierfür ist die optische Kombiniereinrichtung **107** als ein Multimode-Interferometer, insbesondere ein 2x2 Multimode-Interferometer ausgebildet. Die optische Kombiniereinrichtung **107** weist ferner einen ersten optischen Signalausgang **110** und einen zweiten optischen Signalausgang **111** auf. Durch ein kontrolliertes Ansteuern der mindestens einen Modulationseinrichtung **101, 102** mit einem elektrischen Datensignal können Daten auf das optische Ausgangssignal übertragen werden. Ferner kann der Mach-Zehnder-Modulator **100** derart angesteuert werden, dass das optische Ausgangssignal, auf welches die Daten übertragen wurden, an den ersten Signalausgang **110** der optischen Kombiniereinrichtung **107** geleitet wird. Hierdurch können Daten in einem Transmitter-Modus des Transceivers 1 gesendet werden.

Durch ein kontrolliertes Ansteuern der mindestens einen Modulationseinrichtung **101, 102** mit einem statischen elektrischen Steuersignal kann das optische Eingangssignal im Wesentlichen vollständig an den zweiten Signalausgang **111** geleitet werden. Alternativ oder zusätzlich kann auch durch ein kontrolliertes Ansteuern des Arbeitspunktmodulators **150** mit einem statischen elektrischen Steuersignal das optische Eingangssignal im Wesentlichen vollständig an den zweiten Signalausgang **111** geleitet werden. Somit kann dies durch ein kontrolliertes Ansteuern entweder von nur der mindestens einen Modulationseinrichtung **101, 102,** oder von nur des Arbeitspunktmodulators **150** oder von der mindestens einen Modulationseinrichtung **101, 102** und des Arbeitspunktmodulators **150** bewirkt werden. Somit steht das optische Eingangssignal in einem Receiver-Modus nach einem Durchlaufen des Mach-Zehnder-Modulators **100** zur Weiterverarbeitung an dem zweiten optischen Signalausgang **111** zur Verfügung.

Der zweite Signalausgang **111** ist insbesondere mit einer Monitor-Photodiode **112** bzw. einer ersten Monitor-Photodiode **112** verbunden, wobei der zweite Signalausgang **111** insbesondere optisch mit der Monitor-Photodiode **112** verbunden ist. Die Monitor-Photodiode **112** ist hierbei ausgelegt, optische Signale, welche an den zweiten Signalausgang **111** geleitet werden, in elektrische Signale umzuwandeln. Hierzu ist die erste Monitor-Photodiode **112** mit mindestens einem ersten Datenausgang **115** des Transceivers 1 elektrisch verbunden. Ferner ist die erste Monitor-Photodiode **112** mit mindestens einem ersten Monitorsignalausgang **113** elektrisch verbunden. Insbesondere kann die Monitor-Photodiode **112** auch nur mit mindestens einem ersten Datenausgang **115** elektrisch verbunden ausgebildet sein.

Der mindestens eine erste Monitorsignalausgang **113** ist hierbei insbesondere mit der Arbeitspunkteinheit **114** elektrisch verbunden, welche ein elektrisches Signal der Monitor-Photodiode **112** auswerten kann, um einen Arbeitspunkt des Mach-Zehnder-Modulators **100** einzustellen.

In dem Receiver-Modus ist die Monitor-Photodiode **112** ferner ausgelegt, das optische Ausgangssignal in ein erstes elektrisches Datenausgangssignal umzuwandeln und dieses an den mindestens einen ersten Datenausgang **115** des Transceivers **1** zu leiten. Somit kann ein optisches Eingangssignal ohne zusätzliche Bauteile des Mach-Zehnder-Modulators **100** in ein erstes elektrisches Datenausgangssignal umgewandelt werden, welches zur weiteren Verarbeitung an den mindestens einen ersten Datenausgang **115** geleitet wird.

Hierdurch wird ermöglicht, dass der Transceiver **1** in einem Transmitter-Modus und in einem Receiver-Modus betrieben werden kann, wobei eine schnelle Umschaltung zwischen den Modi aufgrund der schnellen photonischen Bauteile gewährleistet wird.

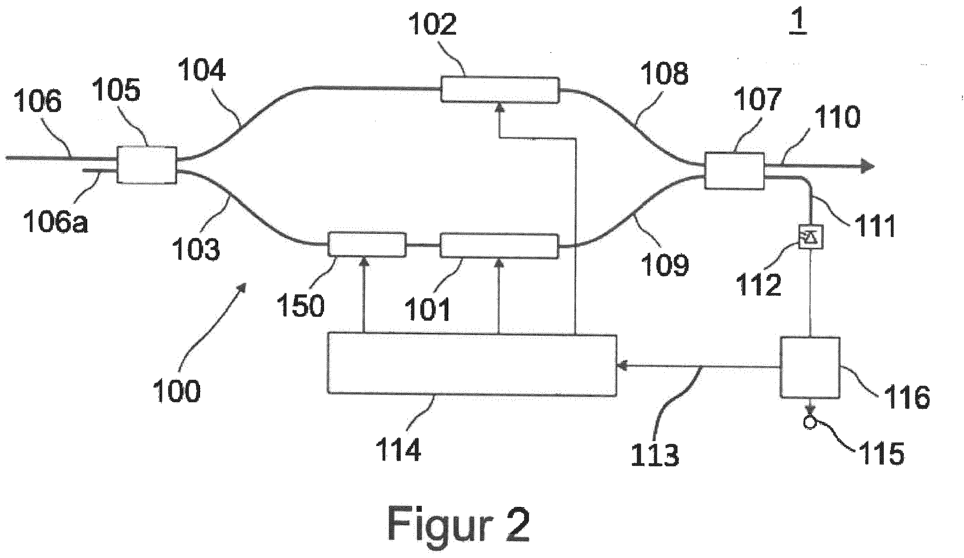

**Figur 2** zeigt eine schematische Ansicht des Transceivers **1** aus Figur 1, wobei der Transceiver **1** durch einen Signalverteiler **116** bzw. einen ersten Signalverteiler **116** erweitert ist. Der Signalverteiler **116** ist insbesondere ausgelegt, in dem Transmitter-Modus, ein elektrisches Ausgangssignal der Monitor-Photodiode **112** an den mindestens einen ersten Monitorsignalausgang **113** bzw. an die Arbeitspunkteinheit **114** zu leiten. Der Signalverteiler **116** ist ferner ausgebildet, das elektrische Ausgangssignal der Monitor-Photodiode **112** in dem Receiver-Modus an den mindestens einen ersten Datenausgang **115** zu leiten.

Der Signalverteiler **116** kann ferner eine Signalverstärkungseinrichtung und/oder eine Signalanpassungseinrichtung umfassen. Durch die Verwendung einer Signalverstärkungseinrichtung kann selbst ein schwaches Datenausgangssignal wie benötigt verstärkt werden. Die Signalverstärkungseinrichtung kann hierfür mit einer internen Energiequelle, z.B. einer Batterie, oder einer externen Energiequelle, z.B. ein externer Stromanschluss, verbunden sein. Die Signalverstärkungseinrichtung kann ferner wie bereits oben offenbart ausgelegt sein. Die Signalanpassungseinrichtung ist ausgelegt, das Datenausgangssignal derart anzupassen, dass das Datenausgangssignal weiterverwendet werden kann. Hierfür kann das Datensignal beispielsweise gemäß eines benötigten Datenformats angepasst werden.

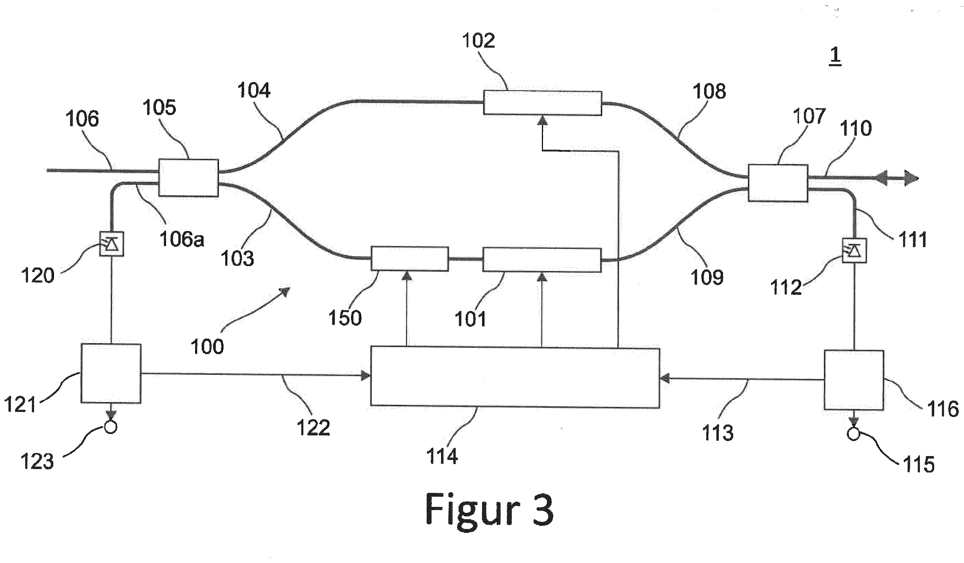

**Figur 3** zeigt eine schematische Ansicht des Transceivers **1** aus Figur **2****,** wobei der Transceiver **1** um eine zweite Monitor-Photodiode **120** und einen zweiten Signalverteiler **121** erweitert wurde. Insbesondere ist der Transceiver **1** hierbei konfiguriert:
- in dem Transmitter-Modus ein erstes optisches Eingangssignal, welches über den ersten Signaleingang **106** empfangen wird, in ein optisches Ausgangssignal an dem ersten optischen Signalausgang **110** umzuwandeln;
- in dem Receiver-Modus ein erstes optisches Eingangssignal, welches über den ersten Signaleingang **106** empfangen wird, im Wesentlichen vollständig an die erste Monitor-Photodiode **112** zu leiten;
- in dem zweiten Transmitter-Modus ein zweites optisches Eingangssignal, welches über den ersten optischen Signalausgang **110** empfangen wird, in ein optisches Ausgangssignal an dem ersten optischen Signaleingang **106** umzuwandeln; und
- in dem zweiten Receiver-Modus ein zweites optisches Eingangssignal, welches über den ersten Signalausgang **110** empfangen wird, im Wesentlichen vollständig an die zweite Monitor-Photodiode **120** zu leiten;

Der Mach-Zehnder-Modulator **100** ist hierbei mit der optischen Teilereinrichtung **105** ausgebildet, welche den ersten Signaleingang **106** der optischen Teilereinrichtung **105** und den zweiten Signaleingang **106a** der optischen Teilereinrichtung **105** umfasst. Ein erstes optisches Eingangssignal kann über den ersten Signaleingang **106** der optischen Teilereinrichtung **105** von der optischen Teilereinrichtung **105** empfangen werden. Der zweite Signaleingang **106a** ist hierbei mit der zweiten Monitor-Photodiode **120** verbunden. Die optische Teilereinrichtung **105** ist hierbei insbesondere ausgelegt, das erste optische Eingangssignal auf den ersten optischen Führungsarm **103** und den zweiten optischen Führungsarm **104** zu verteilen, und das zweite optische Eingangssignal über die beiden optischen Führungsarme **103** und **104** zu empfangen und zu kombinieren. Hierzu ist die optische Teilereinrichtung **105** beispielsweise als Multimode-Interferometer, insbesondere als 2x2 Multimode-Interferometer ausgebildet.

Die Funktionsweise des Transceivers **1** in dem Transmitter-Modus und dem Receiver-Modus entspricht hierbei der Beschreibung für Figuren 1 und 2.

Das zweite optische Eingangssignal wird über den ersten optischen Signalausgang **110** von der optischen Kombiniereinrichtung **107** empfangen und auf die beiden optischen Führungsarme **103** und **104** verteilt. Ein erster Teil des zweiten optischen Eingangssignals durchläuft den ersten optischen Führungsarm **103** und wird durch die erste Modulationseinrichtung **101** und/oder den Arbeitspunktmodulator **150** phasenmoduliert. Der Arbeitspunkt des Mach-Zehnder-Modulators **100** ist hierbei durch ein kontrolliertes Ansteuern mindestens der ersten Modulationseinrichtung **101** und/oder des ersten Arbeitspunktmodulators **150** einstellbar, wobei eine Arbeitspunkteinheit **114** die erste Modulationseinrichtung **101** und/oder den Arbeitspunktmodulator **150** durch ein Steuersignal kontrolliert.

Die erste Modulationseinrichtung **101** ist hierbei ausgelegt, eine Phase des ersten Teils des zweiten Eingangssignals zu modulieren. Die erste Modulationseinrichtung **101** kann hierbei als schneller HF-Phasenmodulator ausgebildet sein, und ist durch die Arbeitspunkteinheit **114** ansteuerbar. Die Reihenfolge von Arbeitspunktmodulator **150** und erster Modulationseinrichtung **101** ist hierbei nicht auf die gezeigte Reihenfolge beschränkt.

Ein zweiter Teil des zweiten optischen Eingangssignals durchläuft den zweiten optischen Führungsarm **104** und wird durch eine zweite Modulationseinrichtung **102** phasenmoduliert. Die zweite Modulationseinrichtung **102** kahn hierbei als schneller HF-Phasenmodulator ausgebildet sein, und ist durch die Arbeitspunkteinheit **114** ansteuerbar. Durch ein Bereitstellen von jeweils mindestens einer Modulationseinrichtung **101, 102** in jedem optischen Führungsarm **103, 104** kann eine Effizienz der Phasenmodulation erhöht werden. Zudem kann ferner mindestens ein zweiter Arbeitspunktmodulator in dem zweiten optischen Führungsarm angeordnet sein, wodurch eine effiziente Arbeitspunktregelung des Mach-Zehnder-Modulators **100** ermöglicht wird.

Das Bereitstellen eines Arbeitspunktmodulators **150** ist nicht zwingend erforderlich, und somit ist auch ein Mach-Zehnder-Modulator **100** ohne zusätzlichen Arbeitspunktmodulator **150** möglich. In diesem Fall kann die Arbeitspunktregelung über die mindestens eine Modulationseinrichtung **101, 102** ermöglicht werden.

Der erste Teil des zweiten optischen Eingangssignals und der zweite Teil des zweiten optischen Eingangssignals wird durch den ersten und zweiten optischen Führungsarm **103** und **104** an die optische Teilereinrichtung **105** geleitet. Die optische Teilereinrichtung **105** ist ausgelegt, den ersten Teil des zweiten optischen Eingangssignals und den zweiten Teil des zweiten optischen Eingangssignals zu einem zweiten optischen Ausgangssignal zu kombinieren. Hierfür ist die optische Teilereinrichtung **105** beispielsweise als ein Multimode-Interferometer, insbesondere ein 2x2 Multimode-Interferometer ausgebildet. Durch ein kontrolliertes Ansteuern der mindestens einen Modulationseinrichtung **101, 102** mit einem elektrischen Datensignal können Daten auf das zweite optische Ausgangssignal übertragen werden. Ferner kann der Mach-Zehnder-Modulator **100** derart angesteuert werden, dass das zweite optische Ausgangssignal, auf welches die Daten übertragen wurden, an den ersten Signaleingang **106** der optischen Teilereinrichtung **105** geleitet wird. Hierdurch können Daten in dem zweiten Transmitter-Modus des Transceivers **1** gesendet werden. Somit wird eine bidirektionale Transmission von optischen Datensignalen durch den Transceiver **1** ermöglicht.

Durch ein kontrolliertes Ansteuern der mindestens einen Modulationseinrichtung **101, 102** mit einem statischen elektrischen Steuersignal kann das zweite optische Eingangssignal im Wesentlichen vollständig an den zweiten Signaleingang **106a** geleitet werden. Alternativ oder zusätzlich kann auch durch ein kontrolliertes Ansteuern des Arbeitspunktmodulators **150** mit einem statischen elektrischen Steuersignal das zweite optische Eingangssignal im Wesentlichen vollständig an den zweiten Signaleingang **106a** geleitet werden. Somit kann dies durch ein kontrolliertes Ansteuern entweder von nur der mindestens einen Modulationseinrichtung **101**, **102,** oder von nur des Arbeitspunktmodulators **150** oder von der mindestens einen Modulationseinrichtung **101, 102** und des Arbeitspunktmodulators **150** bewirkt werden. Somit steht das optische Eingangssignal in dem zweiten Receiver-Modus nach einem Durchlaufen des Mach-Zehnder-Modulators **100** zur Weiterverarbeitung an dem zweiten optischen Signaleingang **106a** zur Verfügung.

Der zweite Signaleingang **106a der** optischen Teilereinrichtung **105** ist insbesondere mit der zweiten Monitor-Photodiode **120** optisch verbunden. Die zweite Monitor-Photodiode **120** ist hierbei derart ausgelegt, dass die zweite Monitor-Photodiode **120** optische Signale, welche an den zweiten optischen Signaleingang **106a** geleitet werden, empfängt und in elektrische Signale umwandelt. Hierzu ist die zweite Monitor-Photodiode **120** mit mindestens einem zweiten Datenausgang **123** des Transceivers **1** und mit mindestens einem zweiten Mohitorsignalausgang **122** elektrisch verbunden. Insbesondere kann die zweite Monitor-Photodiode **120** auch nur mit mindestens einem zweiten Datenausgang **123** elektrisch verbunden ausgebildet sein.

Der mindestens eine zweite Monitorsignalausgang **122** der zweiten Monitor-Photodiode **120** ist hierbei mit der Arbeitspunkteinheit **114** elektrisch verbunden, welche ein zweites elektrisches Monitorsignal der zweiten Monitor-Photodiode **120** auswerten kann, um einen Arbeitspunkt des Mach-Zehnder-Modulators **100** einzustellen.

In dem zweiten Receiver-Modus ist die zweite Monitor-Photodiode **120** ferner ausgelegt, das optische Ausgangssignal in ein zweites elektrisches Datenausgangssignal umzuwandeln und dieses an den mindestens einen zweiten Datenausgang **123** des Transceivers **1** zu leiten. Somit kann ein optisches Eingangssignal des Mach-Zehnder-Modulators **100** entlang zwei Übertragungsrichtungen in ein elektrisches Datenausgangssignal umgewandelt werden, welches zur weiteren Verarbeitung an den mindestens einen ersten Datenausgang **115** des Transceivers **1** oder an den mindestens einen zweiten Datenausgang **123** des Transceivers **1** geleitet wird.

Die Monitor-Photodiode **112** und die zweite Monitor-Photodiode **120** können identisch ausgebildet sein, um gleichmäßige Empfangseigenschaften des Transceivers **1** zu ermöglichen. Alternativ können die Monitor-Photodiode **112** und die zweite Monitor-Photodiode **120** auch jeweils den Eigenschaften der jeweilig entsprechenden Empfangsstrecke bzw. Übertragungsrichtung angepasst sein. Hierfür könnten beispielsweise entlang einer Richtung schwächere Signale übermittelt werden als entlang der entgegengesetzten Richtung, wofür eine der Photodioden mit erhöhter Sensitivität ausgebildet werden kann.

Der Transceiver **1** kann einen zweiten Signalverteiler **121** aufweisen. Der zweite Signalverteiler **121** ist insbesondere ausgelegt, in dem zweiten Transmitter-Modus, ein zweites elektrisches Monitorsignal der zweiten Monitor-Photodiode **120** an den mindesten einen zweiten Monitorsignalausgang **122** der zweiten Monitor-Photodiode **120** bzw. an die Arbeitspunkteinheit **114** zu leiten. Der zweite Signalverteiler **121** ist ferner ausgebildet, das elektrische Datenausgangssignal der zweiten Monitor-Photodiode **120** in dem zweiten Receiver-Modus an den mindestens einen zweiten Datenausgang **123** des Transceivers **1** zu leiten.

Der zweite Signalverteiler **121** kann ferner eine Signalverstärkungseinrichtung und/oder eine Signalanpassungseinrichtung umfassen. Durch die Verwendung einer Signalverstärkungseinrichtung kann selbst ein schwaches Datenausgangssignal wie benötigt verstärkt werden. Die Signalverstärkungseinrichtung des zweiten Signalverteilers **121** kann hierfür mit einer internen Energiequelle, z.B. einer Batterie, oder einer externen Energiequelle, z.B. ein externer Stromanschluss; verbunden sein. Die Signalverstärkungseinrichtung des zweiten Signalverteilers **121** kann ferner wie bereits oben offenbart ausgelegt sein. Die Signalanpassungseinrichtung des zweiten Signalverteilers **121** ist ausgelegt, das Datenausgangssignal derart anzupassen, dass das Datenausgangssignal weiterverwendet werden kann. Hierfür kann das Datensignal beispielsweise gemäß eines benötigten Datenformats angepasst werden. Insbesondere können der Signalverteiler **116** und der zweite Signalverteiler **121** identisch ausgebildet sein.

Der Begriff "im Wesentlichen" ist im Rahmen der Beschreibung als umfassend geringer herstellungs- und umweltbedingter Abweichungen zu verstehen.

Die Erfindung ist nicht auf die in den Figuren offenbarten illustrativen Ausführungsformen beschränkt. Vielmehr kann ein Transceiver und/oder ein Verfahren eine beliebige Kombination der in der Beschreibung und den Figuren offenbarten Merkmale aufweisen.

### Bezugszeichenliste

- **1**: Transceiver
- **100**: Mach-Zehnder-Modulator
- **101**: erste Modulationseinrichtung
- **102**: zweite Modulationseinrichtung
- **103**: erster optischer Führungsarm
- **104**: zweiter optischer Führungsarm
- **105**: optische Teilereinrichtung
- **106**: erster Signaleingang der optischen Teilereinrichtung
- **106a**: zweiter Signaleingang der optischen Teilereinrichtung
- **107**: optische Kombiniereinrichtung
- **108**: erster Signaleingang der optischen Kombiniereinrichtung
- **109**: zweiter Signaleingang der optischen Kombiniereinrichtung
- **110**: erster optischer Signalausgang der optischen Kombiniereinrichtung
- **111**: zweiter optischer Signalausgang der optischen Kombiniereinrichtung
- **112**: Monitor-Photodiode bzw. erste Monitor-Photodiode
- **113**: erster Monitorsignalausgang
- **114**: Arbeitspunkteinheit
- **115**: erster Datenausgang
- **116**: Signalverteiler
- **120**: zweite Monitor-Photodiode
- **121**: zweiter Signalverteiler
- **122**: zweiter Monitorsignalausgang
- **123**: zweiter Datenausgang
- **150**: Arbeitspunktmodulator

## Patentansprüche

1. Transceiver (1) für optische Übertragungsstrecken, umfassend:
- einen Mach-Zehnder-Modulator (100) umfassend:
-- eine optische Teilereinrichtung (105), welche ausgelegt ist, ein optisches Eingangssignal auf mindestens zwei optische Führungsarme (103, 104) zu verteilen,
-- mindestens eine Modulationseinrichtung (101, 102), welche als optischer Phasenmodulator zur Phasenmodulation des optischen Eingangssignals in den mindestens zwei optischen Führungsarmen (103, 104) ausgelegt ist, und
-- eine optische Kombiniereinrichtung (107), wobei die optische Kombiniereinrichtung (107) einen ersten optischen Signalausgang (110) und einen zweiten optischen Signalausgang (111) aufweist und ausgelegt ist, optische Signale der mindestens zwei optischen Führungsarme (103, 104) zu kombinieren; und
- eine erste Monitor-Photodiode (112), welche mit dem zweiten optischen Signalausgang (111) optisch verbunden ist und welche mit mindestens einem Datenausgang des Transceivers (1) elektrisch verbunden ist,
wobei der Mach-Zehnder-Modulator (100) in einem Transmitter-Modus betreibbar ausgelegt ist, in dem ein optisches Ausgangssignal basierend auf dem optischen Eingangssignal an dem ersten optischen Signalausgang (110) erzeugt wird, und in einem Receiver-Modus betreibbar ausgelegt ist, in dem das optische Eingangssignal an die erste Monitor-Photodiode (112) gelenkt ist und in ein erstes elektrisches Datenausgangssignal umgewandelt wird, wobei das erste elektrische Datenausgangssignal an mindestens einen ersten Datenausgang (115) des mindestens einen Datenausgangs des Transceivers (1) geleitet ist.

2. Transceiver (1) nach Anspruch 1, wobei die optische Kombiniereinrichtung (107) ausgelegt ist, ein zweites optisches Eingangssignal von dem ersten optischen Signalausgang (110) auf die mindestens zwei optische Führungsarme (103, 104) zu verteilen,
wobei die mindestens eine Modulationseinrichtung (101, 102) als optischer Phasenmodulator zur Phasenmodulation des zweiten optischen Eingangssignals in den mindestens zwei optischen Führungsarmen (103, 104) ausgelegt ist,
wobei die optische Teilereinrichtung (105) einen ersten optischen Signaleingang (106) und einen zweiten optischen Signaleingang (106a) aufweist und ferner ausgelegt ist, optische Signale der mindestens zwei optischen Führungsarme (103, 104) zu kombinieren,
wobei der Transceiver eine zweite Monitor-Photodiode (120) umfasst, welche mit dem zweiten optischen Signaleingang (106a) optisch verbunden ist und welche mit mindestens einem Datenausgang des Transceivers (1) elektrisch verbunden ist,
wobei der Mach-Zehnder-Modulator (100) in einem zweiten Transmitter-Modus betreibbar ausgelegt ist, in dem ein zweites optisches Ausgangssignal basierend auf dem zweiten optischen Eingangssignal an dem ersten optischen Signaleingang (106) erzeugt wird, und in einem zweiten Receiver-Modus betreibbar ausgelegt ist, in dem das zweite optische Eingangssignal an die zweite Monitor-Photodiode (120) gelenkt ist und in ein zweites elektrisches Datenausgangssignal umgewandelt wird, wobei das zweite elektrische Datenausgangssignal an mindestens einen zweiten Datenausgang (123) des mindestens einen Datenausgangs des Transceivers (1) geleitet ist.

3. Transceiver (1) nach Anspruch 2, wobei der mindestens eine erste Datenausgang (115) und der mindestens eine zweite Datenausgang (123) zu einem gemeinsamen Datenausgang des Transceivers (1) verbunden sind.

4. Transceiver (1) nach einem der vorangegangenen Ansprüche, ferner umfassend eine Arbeitspunkteinheit (114) zur Regelung des Arbeitspunktes des Mach-Zehnder-Modulators (100),
wobei die erste Monitor-Photodiode (112) ferner mit mindestens einem ersten Monitorsignalausgang (113) elektrisch verbunden ist,
wobei die Arbeitspunkteinheit (114) über den mindestens einen ersten Monitorsignalausgang (113) mit der ersten Monitor-Photodiode (112) verbunden ist, und wobei die Arbeitspunkteinheit (114) mit der mindestens einen Modulationseinrichtung (101, 102) und/oder mindestens einem Arbeitspunktmodulator (150) verbunden ist.

5. Transceiver (1) nach Anspruch 4, wobei die erste Monitor-Photodiode (112) ausgelegt ist, mindestens ein erstes elektrisches Monitorsignal zur Regelung des Arbeitspunktes zu erzeugen und an den mindestens einen ersten Monitorsignalausgang (113) zu leiten,
wobei die Arbeitspunkteinheit (114) ausgelegt ist, den Arbeitspunkt des Mach-Zehnder-Modulators (100) basierend auf dem mindestens einen ersten elektrischen Monitorsignal zu regeln.

6. Transceiver (1) nach einem der Ansprüche 4 bis 5, ferner umfassend:
- einen ersten Signalverteiler (116), welcher ausgelegt ist:
-- zumindest in dem Transmitter-Modus mindestens ein elektrisches Ausgangssignal der ersten Monitor-Photodiode (112) an den mindestens einen ersten Monitorsignalausgang (113) zu leiten, und
-- zumindest in dem Receiver-Modus mindestens ein elektrisches Ausgangssignal der ersten Monitor-Photodiode (112) an den mindestens einen ersten Datenausgang (115) zu leiten, und, optional, wobei der erste Signalverteiler (116) eine Signalverstärkungseinrichtung und/oder eine Signalanpassungseinrichtung umfasst.

7. Transceiver (1) nach einem der Ansprüche 4 bis 6, solange sich diese auf mindestens Anspruch 2 beziehen, wobei die zweite Monitor-Photodiode (120) ferner mit mindestens einem zweiten Monitorsignalausgang (122) elektrisch verbunden ist,
wobei die Arbeitspunkteinheit (114) über den mindestens einen zweiten Monitorsignalausgang (122) mit der zweiten Monitor-Photodiode (120) verbunden ist.

8. Transceiver (1) nach Anspruch 7, wobei die zweite Monitor-Photodiode (120) ausgelegt ist, mindestens ein zweites elektrisches Monitorsignal zur Regelung des Arbeitspunktes zu erzeugen und an den mindestens einen zweiten Monitorsignalausgang (122) zu leiten,
wobei die Arbeitspunkteinheit (114) ausgelegt ist, den Arbeitspunkt des Mach-Zehnder-Modulators (100) basierend auf dem mindestens einen zweiten elektrischen Monitorsignal zu regeln.

9. Transceiver (1) nach einem der Ansprüche 6 bis 8, ferner umfassend:
- einen zweiten Signalverteiler (121), welcher ausgelegt ist:
-- zumindest in dem zweiten Transmitter-Modus mindestens ein elektrisches Ausgangssignal der zweiten Monitor-Photodiode (120) an den mindestens einen zweiten Monitorsignalausgang (122) zu leiten, und
-- zumindest in dem zweiten Receiver-Modus mindestens ein elektrisches Ausgangssignal der zweiten Monitor-Photodiode (120) an den mindestens einen zweiten Datenausgang (123) zu leiten, und, optional, wobei der zweite Signalverteiler (121) eine Signalverstärkungseinrichtung und/oder eine Signalanpassungseinrichtung umfasst.

10. Transceiver (1) nach einem der Ansprüche 4 bis 9, wobei die Arbeitspunkteinheit (114) ausgelegt ist, die mindestens eine Modulationseinrichtung (101, 102) und/oder den mindestens einen Arbeitspunktmodulator (150) zur Regelung des Arbeitspunkts des Mach-Zehnder-Modulators (100) anzusteuern.

11. Transceiver (1) nach einem der vorangegangenen Ansprüche, ferner umfassend:
- ein Umschalterelement, welches ausgelegt ist:
-- zumindest in dem Transmitter-Modus die Modulationseinrichtung (101, 102) mit einem elektrischen Dateneingangssignal anzusteuern, und
-- zumindest in dem Receiver-Modus die Modulationseinrichtung (101, 102) mit einem statischen elektrischen Steuersignal anzusteuern, wobei das statische elektrische Steuersignal derart angelegt ist, so dass das optische Eingangssignal im Wesentlichen vollständig an die erste Monitor-Photodiode (112) geleitet wird.

12. Transceiver (1) nach einem der vorangegangenen Ansprüche, wobei die optische Teilereinrichtung (105) und/oder die optische Kombiniereinrichtung (107) als Multimode-Interferometer ausgebildet ist.

13. Transceiver (1) nach einem der vorangegangenen Ansprüche, wobei der Transceiver (1) eine Datenübertragungsgeschwindigkeit von mindestens 10 Gigabit/s, bevorzugt mindestens 30 Gigabit/s, besonders bevorzugt mindestens 40 Gigabit/s aufweist.

14. Verfahren zum Empfang eines optischen Eingangssignals, umfassend:
Bereitstellen eines Transceivers (1) für optische Übertragungsstrecken, umfassend:
- einen Mach-Zehnder-Modulator (100) umfassend eine optische Teilereinrichtung (105), welche ausgelegt ist, ein optisches Eingangssignal auf mindestens zwei optische Führungsarme (103, 104) zu verteilen, mindestens eine Modulationseinrichtung (101, 102), welche als optischer Phasenmodulator zur Phasenmodulation des optischen Eingangssignals in den mindestens zwei optischen Führungsarmen (103, 104) ausgelegt ist, und eine optische Kombiniereinrichtung (107), welche einen ersteh optischen Signalausgang (110) und einen zweiten optischen Signalausgang (111) aufweist und ausgelegt ist, optische Signale der mindestens zwei optischen Führungsarme (103, 104) zu kombinieren, und
- eine erste Monitor-Photodiode (112), welche mit dem zweiten optischen Signalausgang (111) optisch verbunden ist und welche mit mindestens einem Datenausgang des Transceivers (1) elektrisch verbunden ist,
wobei der Mach-Zehnder-Modulator (100) in einem Transmitter-Modus betreibbar ausgelegt ist, in dem ein optisches Ausgangssignal basierend auf dem optischen Eingangssignal an dem ersten optischen Signalausgang (110) erzeugt wird, und in einem Receiver-Modus betreibbar ausgelegt ist, in dem das optische Eingangssignal im Wesentlichen vollständig an die Monitor-Photodiode (112) gelenkt ist und in ein erstes elektrisches Datenausgangssignal umgewandelt wird;
Ansteuern des Mach-Zehnder-Modulators (100) in dem Receiver-Modus derart, dass das optische Eingangssignal im Wesentlichen vollständig an den zweiten optischen Signalausgang (111) gelenkt wird; und
Umwandeln des optischen Eingangssignals durch die Monitor-Photodiode (112) in das erste elektrische Datenausgangssignal
Leiten des ersten elektrischen Datenausgangssignals an mindestens einen ersten Datenausgang (115) des mindestens einen Datenausgangs des Transceivers (1).
